# EUROPÄISCHE PATENTSCHRIFT

(11) **EP 0 623 988 B1**
(45) Veröffentlichungstag und Bekanntmachung des Hinweises auf die Patenterteilung: **05.02.1997**
(21) Anmeldenummer: 94105970.1
(22) Anmeldetag: 18.04.1994
(51) Int. Cl.: H02K 9/197, H02K 1/20, H02K 9/19, H02K 9/08, H02K 17/12

(54) **Elektrische Maschine**
Electrical machine
Machine électrique

(30) Priorität: 07.05.1993 DE 4315280
(43) Veröffentlichungstag der Anmeldung: 09.11.1994
(73) Patentinhaber: SIEMENS AKTIENGESELLSCHAFT, 80333 München (DE)
(72) Erfinder: Pfannschmidt, Bernd, Dipl.-Ing. (FH), D-90574 Rosstal (DE); Scharstein, Egbert, Dipl.-Ing. (FH), D-90469 Nürnberg (DE)

(56) Entgegenhaltungen:
- EP-A- 0 414 926
- US-A- 2 648 789
- SOVIET INVENTIONS ILLUSTRATED, R Sektion, Woche A28, 22. August 1978 DERWENT PUBLICATIONS LTD., London; & SU-A-570 958 (ZLOTNIKOV)

## Beschreibung

Die Erfindung bezieht sich auf eine elektrische Maschine, deren Außenläufer auf einem Ständer drehbar gelagert ist.

Derartige Maschinen können z.B. als Radnaben-Direktantriebe bei Schienenfahrzeugen des ÖPNV eingesetzt werden. Bei niedrigen Fahrzeuggeschwindigkeiten läuft ein solcher getriebeloser Antriebsmotor nur mit niedrigen Drehzahlen und damit nur mit einer geringen Innenluftkühlung. Dies kann bei längeren Fahrzeiten im unteren Geschwindigkeitsbereich zu einer unerwünscht hohen Erwärmung des Antriebsmotors führen. Dieser Effekt wird beim Bremsen - der Antriebsmotor arbeitet dann als Generator - noch verstärkt.

Aus der SU-A-570 958 ist eine elektrische Maschine bekannt, deren Außenläufer ein Läuferblechpaket trägt und auf einem Ständer mit Ständerwicklung drehbar gelagert ist. Ein von einer Ausnehmung in der Ständerachse gebildeter Ringraum ist mit einem flüssigen Kühlmedium gefüllt, das seine Wärme über wenigstens einen axial verlaufenden Kanal an einen an einem Motorlagerschild vorgesehenen Wärmeabstrahler mit Kühlrippen abgeben kann. Diese Wärmeabführung ist nur wenig wirksam. Ferner trägt bei der bekannten Maschine der Außenläufter Lüfterflügel, die einen im Motorinnenraum zirkulierenden Kühlluftstrom axial durch die Ständerwicklung fördern.

Aufgabe der vorliegenden Erfindung ist es deshalb, eine elektrische Maschine der eingangs genannten Art zu schaffen, die eine wesentlich verbesserte Kühlung aufweist.

Die Aufgabe wird erfindungsgemäß durch die Merkmale im Anspruch 1 gelöst. Vorteilhafte Ausgestaltungen der Erfindung sind jeweils Gegenstand der weiteren Ansprüche.

Bei der elektrischen Maschine nach Anspruch 1 ist im Inneren des Ständers, also radial unterhalb des Ständerblechpaketes, wenigstens ein von Kühlflüssigkeit durchströmter Kühlmantel angeordnet. Radial weiter innen weist der Ständer wenigstens einen Kühlkanal auf, der vom zirkulierenden Innenkühlmedium, vorzugsweise Luft, durchströmt ist. Durch die erfindungsgemäße Anordnung wenigstens eines Kühlmantels für die Kühlflüssigkeit und wenigstens eines Kühlkanals für die Kühlluft wird auch bei niedrigen Drehzahlen eine verbesserte Kühlung erzielt, da von der Kühlflüssigkeit im Kühlmantel der Ständer und damit sowohl das Ständerblechpaket als auch die im Maschineninnenraum zirkulierende Kühlluft gekühlt werden.

Die Erfindung sowie weitere vorteilhafte Ausgestaltungen, die Gegenstand der weiteren Ansprüche sind, werden anhand von zwei Ausführungsbeispielen in der Zeichnung näher erläutert. Es zeigen:
- FIG 1: eine erste Ausführungsform der erfindungsgemäßen elektrischen Maschine im Längsschnitt,
- FIG 2: eine zweite Ausführungsform der erfindungsgemäßen elektrischen Maschine im Längsschnitt.

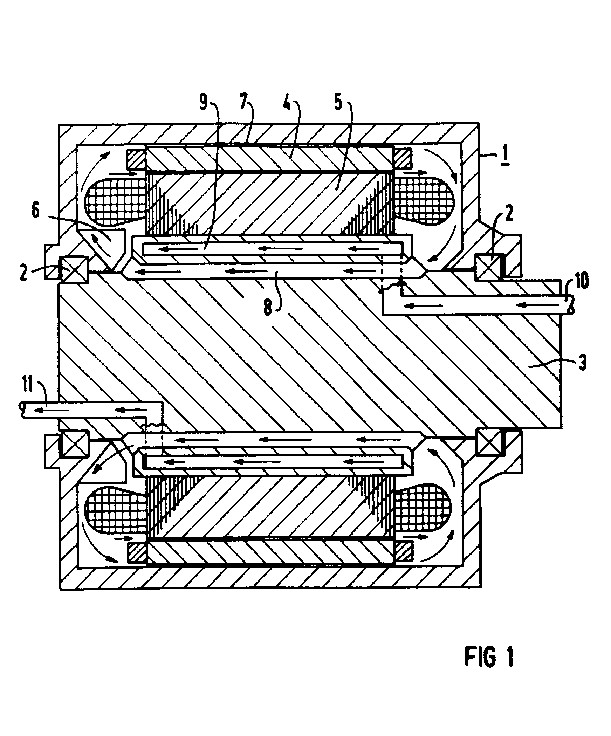

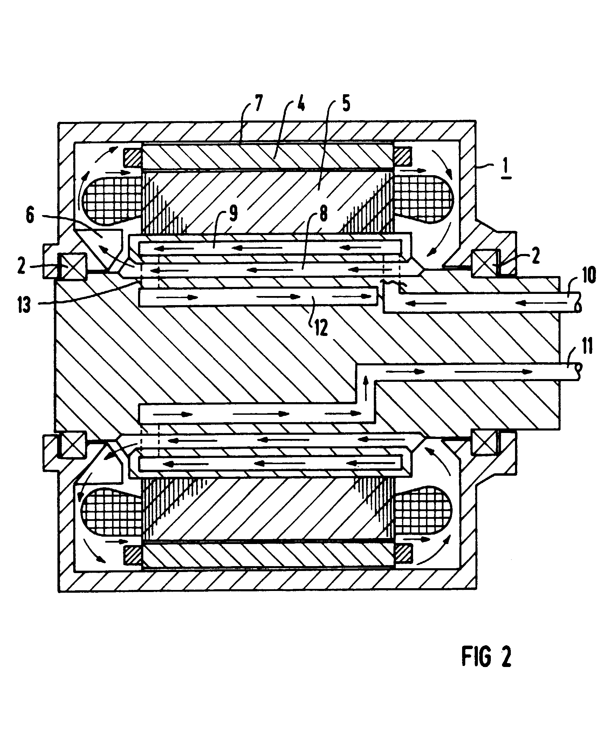

In FIG 1 und 2 ist ein Außenläufer 1 einer elektrischen Maschine mittels einer Lagerung 2 auf einem Ständer 3 drehbar gelagert. In dem in den FIG 1 und 2 dargestellten Ausführungsbeispiel ist die elektrische Maschine als Asynchronmaschine ausgebildet. Der Außenläufer weist also ein Läuferblechpaket 4 auf und der Ständer 3 trägt ein Ständerblechpaket 5.

An einer der beiden Stirnseiten des Außenläufers 1 sind mehrere Lüfterflügel 6 angeordnet (in FIG 1 und 2 sind aufgrund der Darstellung jeweils nur zwei Lüfterflügel sichtbar), die bei Rotation des Außenläufers 1 eine Zirkulation des Innenkühlmediums (durch Pfeile symbolisiert) erzeugen. Als Innenkühlmedium sind sowohl Gase als auch Flüssigkeiten geeignet. Vorzugsweise wird jedoch Luft zur Kühlung verwendet.

Der Innenkühlluftstrom umströmt sowohl das Läuferblechpaket 4 als auch das Ständerblechpaket 5 und durchströmt den Spalt zwischen dem Läuferblechpaket 4 und dem Ständerblechpaket 5. Zur besseren Luftkühlung sind zwischen dem Außenläufer 1 und dem Läuferblechpaket 4 mehrere Kühlkanäle 7 (in FIG 1 und 2 nur zwei Kühlkanäle sichtbar) angeordnet.

Die Kühlkanäle 7 müssen nicht unbedingt in der in FIG 1 und 2 gezeigten Weise angeordnet sein. So ist es z.B. auch möglich, die Kühlkanäle 7 im Lauferblechpaket 4 oder im Außenlaufer 1 anzuordnen. Auch die Kombination aller drei Möglichkeiten ist denkbar.

Durch den zirkulierenden Kühlluftstrom wird die Wärme vom Lauferblechpaket 4 und vom Ständerblechpaket 5 zum Stander 3 transportiert. Im Ständer 3 durchströmt die durchwarmte Kühlluft mehrere verteilt angeordnete, im wesentlichen in axialer Richtung verlaufende Kühlkanäle 8 (in FIG 1 und 2 nur zwei Kühlkanäle sichtbar). Die Einströmöffnungen der Kühlkanale 8 sind hierbei an der den Lüfterflügeln 6 abgewandten Seite angeordnet, wohingegen sich die Ausströmöffnungen der Kühlkanäle 8 auf der Seite der Lüfterflügel 6 befinden. Einström- und Ausströmöffnungen sind etwa um einen Winkel von 45° geneigt, um ein optimales Ein- bzw. Ausströmen der Innenkühlluft in die bzw. aus den Kühlkanälen 8 sicherzustellen.

Zur Verbesserung der Kühlung ist erfindungsgemaß ein sich ebenfalls in axialer Richtung erstreckender Kühlmantel 9 im Stander 3 angeordnet. Der Kühlmantel 9 ist radial weiter außen als die Kühlkanäle 8 angeordnet. Dadurch befindet sich der Kühlmantel 9 nahe am Ständerblechpaket 5. Der Kühlmantel 9 weist jeweils wenigstens eine Zulaufleitung 10 zur Zuführung der gekühlten Kühlflüssigkeit sowie wenigstens eine Ablaufleitung 11 zur Abführung der erwarmten Kühlflüssigkeit auf (durch Pfeile symbonlisiert).

Bei dem in FIG 1 dargestellten Ausführungsbeispiel ist der Kühlmantel 9 also möglichst nahe am Ständerblechpaket 5 und die Kühlkanale 8 möglichst nahe am Kühlmantel 9. Dadurch ist durch die Kühlflüssigkeit im Kühlmantel 9 sowohl eine gute Abführung der Warme vom Ständerblechpaket 5 gewahrleistet als auch eine gute Kühlung des Innenkühlluftstromes in den Kühlkanälen 8 sichergestellt.

Das in FIG 2 gezeigte Ausführungsbeispiel unterscheidet sich von der Ausgestaltung gemäß FIG 1 durch einen weiteren Kühlmantel 12, der radial weiter innen als die Kühlkanäle 8 angeordnet ist. Der äußere Kühlmantel 9 und der innere Kühlmantel 12 sind durch eine Verbindungsleitung 13 miteinander verbunden. Damit ist für beide Kühlmäntel 9 und 12 nur eine gemeinsame Zulaufleitung 10 und eine gemeinsame Ablaufleitung 11 erforderlich. Die Zulaufleitung 10 mündet im dargestellten Ausführungsbeispiel in den äußeren Kühlmantel 9; die Ablaufleitung 11 ist mit dem inneren Kühlmantel 12 verbunden. Die Kühlung wird bei der in FIG 2 dargestellten Maschine nochmals verbessert, da der Ständer 3 durch die radial zueinander beabstandeten Kühlmäntel 9 und 12 besser gekühlt wird und damit einerseits die Wärme besser aus dem Ständerblechpaket 5 abgeführt wird und andererseits die Innenkühlluft in den Kühlkanälen 8 stärker gekühlt wird.

Bei der in den FIG 1 und 2 dargestellten elektrischen Maschine weist der Außenläufer 1 ein Läuferblechpaket 4 auf; die elektrische Maschine ist also als Asynchronmaschine ausgebildet. Die elektrische Maschine kann jedoch auch als permanentmagneterregter Synchronmotor ausgeführt sein; der Außenläufer 1 weist dann ringförmig verteilte Permanentmagnete auf.

## Patentansprüche

1. Elektrische Maschine, deren Außenläufer (1) auf einem Ständer (3) drehbar gelagert ist, wobei der Ständer einen von einem Kühlmedium beaufschlagten Kühlkanal und der Außenläufer Lüfterflügel (6) aufweist, **dadurch gekennzeichnet,** daß der Ständer (3) radial unterhalb seines Ständerblechpaketes (5) einen von Kühlflüssigkeit durchströmten Kühlmantel (9) mit wenigstens einer Zulaufleitung (10) und wenigstens einer Ablaufleitung (11) für die Kühlflüssigkeit aufweist und daß ein weiter innen vorgesehener Kühlkanal (8) des Ständers (3) von einem zirkulierenden Innenkühlmedium durchströmbar ist.

2. Elektrische Maschine nach Anspruch 1,
**dadurch gekennzeichnet**,
daß der Ständer (3) wenigstens einen weiteren, von Kühlflüssigkeit durchströmbaren Kühlmantel (12) aufweist, der radial weiter innen als der Kühlkanal (8) angeordnet ist.

3. Elektrische Maschine nach Anspruch 2,
**dadurch gekennzeichnet**,
daß der weitere Kühlmantel als Bohrung ausgebildet ist.

4. Elektrische Maschine nach Anspruch 2,
**dadurch gekennzeichnet,**
daß der weitere Kühlmantel (12) wenigstens eine Zulaufleitung und wenigstens eine Ablaufleitung für die Kühlflüssigkeit aufweist, wobei der Kühlmantel (9) und der weitere Kühlmantel (12) durch wenigstens eine Verbindungsleitung (13) miteinander verbunden sind.

5. Elektrische Maschine nach Anspruch 4,
**dadurch gekennzeichnet,**
daß der Kühlmantel (9) wenigstens eine Zulaufleitung (10) und der weitere Kühlmantel (12) wenigstens eine Ablaufleitung (11) aufweist.

6. Elektrische Maschine nach einem der Ansprüche 1 bis 4,
**dadurch gekennzeichnet,**
daß die Kühlkanäle (8) parallel zur Ständerachse verlaufen.

7. Elektrische Maschine nach einem der Ansprüche 1 bis 6,
**dadurch gekennzeichnet,**
daß der Kühlmantel (9) und/oder der weitere Kühlmantel (12) parallel zur Ständerachse verlaufen.

8. Elektrische Maschine nach einem der Ansprüche 1 bis 6,
**dadurch gekennzeichnet,**
daß im Ständer (3) mehrere Kühlkanäle (8) verteilt angeordnet sind.

9. Elektrische Maschine nach Anspruch 1,
**dadurch gekennzeichnet,**
daß der Kühlkanal (8) spiralförmig im Ständer (3) verläuft.

10. Elektrische Maschine nach einem der Ansprüche 1 bis 9,
**dadurch gekennzeichnet,**
daß alle Kühlmäntel (9) auf einer zur Achse des Ständers (3) konzentrischen Zylinderfläche angeordnet sind.

11. Elektrische Maschine nach einem der Ansprüche 1 bis 10,
**dadurch gekennzeichnet,**
daß alle weiteren Kühlmäntel (12) auf einer zur Achse des Ständers (3) konzentrischen Zylinderfläche angeordnet sind.

12. Elektrische Maschine nach einem der Ansprüche 1 bis 11,
**dadurch gekennzeichnet,**
daß das Innenkühlmedium in den Kühlkanälen (8) und die Kühlflüssigkeit im Kühlmantel (9) die gleiche Strömungsrichtung aufweisen.

13. Elektrische Maschine nach einem der Ansprüche 1 bis 11,
**dadurch gekennzeichnet,**
daß das Innenkühlmedium in den Kühlkanälen (8) und die Kühlflüssigkeit im Kühlmantel (9) eine entgegengesetzte Strömungsrichtung aufweisen.

14. Elektrische Maschine nach einem der Ansprüche 1 bis 13,
**dadurch gekennzeichnet,**
daß die Kühlflüssigkeit im Kühlmantel (9) und die Kühlflüssigkeit im weiteren Kühlmantel (12) eine entgegengesetzte Strömungsrichtung aufweisen.

15. Elektrische Maschine nach einem der Ansprüche 1 bis 14,
**dadurch gekennzeichnet,**
daß der Außenläufer (1) ein Läuferblechpaket (4) aufweist.

16. Elektrische Maschine nach einem der Ansprüche 1 bis 14,
**dadurch gekennzeichnet,**
daß der Außenläufer (1) ringförmig verteilte Permanentmagnete aufweist.

## Claims

1. Electrical machine, the external rotor (1) of which is rotatably mounted on a stator (3), with the stator having a cooling duct which is loaded with a coolant and the external rotor having fan blades (6), characterised in that radially beneath its laminated stator core (5), the stator (3) has a cooling jacket (9), through which cooling fluid flows and which has at least one supply line (10) and at least one discharge line (11) for the cooling fluid, and in that a circulating internal coolant flows through a cooling duct (8) of the stator (3), which cooling duct is provided further inside.

2. Electrical machine according to claim 1, characterised in that the stator (3) has at least one further cooling jacket (12), through which cooling fluid can flow and which is arranged radially further inside than the cooling duct (8).

3. Electrical machine according to claim 2, characterised in that the further cooling jacket is constructed as a bore.

4. Electrical machine according to claim 2, characterised in that the further cooling jacket (12) has at least one supply line and at least one discharge line for the cooling fluid, with the cooling jacket (9) and the further cooling jacket (12) being connected to each other by at least one connection line (13).

5. Electrical machine according to claim 4, characterised in that the cooling jacket (9) has at least one supply line (10) and the further cooling jacket (12) has at least one discharge line (11).

6. Electrical machine according to one of the claims 1 to 4, characterised in that the cooling ducts (8) extend in parallel with the stator axle.

7. Electrical machine according to one of the claims 1 to 6, characterised in that the cooling jacket (9) and/or the further cooling jacket (12) extend in parallel with the stator axle.

8. Electrical machine according to one of the claims 1 to 6, characterised in that a plurality of cooling ducts (8) are distributed in the stator (3).

9. Electrical machine according to claim 1, characterised in that the cooling duct (8) extends in a spiral-shape in the stator (3).

10. Electrical machine according to one of the claims 1 to 9, characterised in that all cooling jackets (9) are arranged on a cylindrical surface which is concentric with respect to the axle of the stator (3).

11. Electrical machine according to one of the claims 1 to 10, characterised in that all further cooling jackets (12) are arranged on a cylindrical surface which is concentric with respect to the axle of the stator (3).

12. Electrical machine according to one of the claims 1 to 11, characterised in that the internal coolant in the cooling ducts (8) and the cooling fluid in the cooling jacket (9) flow in the same direction.

13. Electrical machine according to one of the claims 1 to 11, characterised in that the internal coolant in the cooling ducts (8) and the cooling fluid in the cooling jacket (9) flow in opposite directions.

14. Electrical machine according to one of the claims 1 to 13, characterised in that the cooling fluid in the cooling jacket (9) and the cooling fluid in the further cooling jacket (12) flow in opposite directions.

15. Electrical machine according to one of the claims 1 to 14, characterised in that the external rotor (1) has a laminated rotor core (4).

16. Electrical machine according to one of the claims 1 to 14, characterised in that the external rotor (1) has permanent magnets distributed in a ring.

## Revendications

1. Machine électrique, dont l'induit (1) extérieur est monté de manière à pouvoir tourner sur un stator (3), le stator comportant un canal de refroidissement alimenté en un fluide de refroidissement et l'induit extérieur comportant des ailettes (6) de ventilation, caractérisée en ce que le stator (3) comporte, radialement en-dessous de son paquet de toles statoriques, une enveloppe (9) de refroidissement, dans laquelle passe du liquide de refroidissement et qui comporte au moins un conduit (10) d'amenée et au moins un conduit (11) d'évacuation pour le liquide de refroidissement et en ce qu'il peut passer dans un canal (8) de refroidissement, prévu plus à l'intérieur du stator (3), du fluide de refroidissement intérieur circulant.

2. Machine électrique suivant la revendication 1, caractérisée en ce que le stator (3) comporte au moins une enveloppe (12) de refroidissement supplémentaire, dans laquelle peut passer du liquide de refroidissement, et qui est disposée radialement plus à l'intérieur que le canal (8) de refroidissement.

3. Machine électrique suivant la revendication 2, caractérisée en ce que l'enveloppe de refroidissement supplémentaire a la forme d'un trou.

4. Machine électrique suivant la revendication 2, caractérisée en ce que l'enveloppe (12) de refroidissement supplémentaire comporte au moins un conduit d'amenée et au moins un conduit d'évacuation pour le liquide de refroidissement, l'enveloppe (9) de refroidissement et l'enveloppe (12) de refroidissement supplémentaire communiquent par l'intermédiaire d'au moins un conduit (13) de liaison l'une avec l'autre.

5. Machine électrique suivant la revendication 4, caractérisée en ce que l'enveloppe (9) de refroidissement comporte au moins un conduit (10) d'amenée et l'enveloppe (12) de refroidissement supplémentaire comporte au moins un conduit (11) d'évacuation.

6. Machine électrique suivant l'une des revendications 1 à 4, caractérisée en ce que les canaux (8) de refroidissement s'étendent parallèlement à l'axe du stator.

7. Machine électrique suivant l'une des revendications 1 à 6, caractérisée en ce que l'enveloppe (9) de refroidissement et/ou l'enveloppe (12) de refroidissement supplémentaire s'étendent parallèlement à l'axe du stator.

8. Machine électrique suivant l'une des revendications 1 à 6, caractérisée en ce que plusieurs canaux (8) de refroidissement sont répartis dans le stator (3).

9. Machine électrique suivant la revendication 1, caractérisée en ce que le canal (8) de refroidissement s'étend en forme de spirale dans le stator (3).

10. Machine électrique suivant l'une des revendications 1 à 9, caractérisée en ce que toutes les enveloppes (9) de refroidissement sont disposées sur une surface cylindrique concentrique à l'axe du stator (3).

11. Machine électrique suivant l'une des revendications 1 à 10, caractérisée en ce que toutes les enveloppes (12) de refroidissement supplémentaires sont disposées sur une surface cylindrique concentrique à l'axe du stator (3).

12. Machine électrique suivant l'une des revendications 1 à 11, caractérisée en ce que le fluide de refroidissement intérieur dans les canaux (8) de refroidissement et le liquide de refroidissement dans l'enveloppe (9) de refroidissement ont le même sens d'écoulement.

13. Machine électrique suivant l'une des revendications 1 à 11, caractérisée en ce que le fluide de refroidissement intérieur dans les canaux (8) de refroidissement et le liquide de refroidissement dans l'enveloppe (9) de refroidissement ont des sens d'écoulement opposés.

14. Machine électrique suivant l'une des revendications 1 à 13, caractérisée en ce que le liquide de refroidissement dans l'enveloppe (9) de refroidissement et le liquide de refroidissement dans l'enveloppe (12) de refroidissement supplémentaire ont des sens d'écoulement opposés.

15. Machine électrique suivant l'une des revendications 1 à 14, caractérisée en ce que l'induit (1) extérieur comprend un paquet (4) de tôles d'induit.

16. Machine électrique suivant l'une des revendications 1 à 14, caractérisée en ce que l'induit (1) extérieur comporte des aimants permanents répartis annulairement.
